# EUROPÄISCHE PATENTSCHRIFT

(11) **EP 0 675 311 B1**
(45) Veröffentlichungstag und Bekanntmachung des Hinweises auf die Patenterteilung: **01.10.1997**
(21) Anmeldenummer: 95810017.4
(22) Anmeldetag: 10.01.1995
(51) Int. Cl.: F16L 33/02

(54) **Rohrschellenverschluss**
Pipe clamp lock
Serrure d'un collier de serrage

(30) Priorität: 31.03.1994 DE 4411221
(43) Veröffentlichungstag der Anmeldung: 04.10.1995
(73) Patentinhaber: HILTI Aktiengesellschaft, 9494 Schaan (LI)
(72) Erfinder: Gantner, Gebhard, A-6710 Nenzing (AT); Ofner, Peter, A-6800 Feldkirch (AT); Dengg, Franz, D-66123 Saarbrücken (DE); Münzenberger, Herbert, D-65191 Wiesbaden (DE)
(74) Vertreter: Wildi, Roland

(56) Entgegenhaltungen:
- EP-A- 0 236 217
- EP-A- 0 454 661
- EP-A- 0 461 973
- DE-A- 3 511 261
- DE-C- 3 050 763
- US-A- 2 374 541

## Beschreibung

Die Erfindung betrifft eine Rohrschelle gemäss dem Oberbegriff des Patentanspruchs 1.

Aus der US-PS 2,374,541 ist eine Rohrschelle bekannt, bei der sich der erste Endbereich und der zweite Endbereich im geschlossenen Zustand übeflappen. Gleichzeitig wirkt der vom ersten Endbereich radial abragende Vorsprung mit einer vom freien Ende des zweiten Endbereiches abgewandten Anschlagfläche des zweiten Endbereiches zusammen.

Bei entsprechender Bewegung der Rohre beispielsweise durch äussere mechanische Beeinflussung können die beiden sich überlappenden Endbereiche in radialer Richtung auseinanderbewegen, so dass sich die Verbindung zwischen dem Vorsprung des ersten Endbereiches und der Anschlagfläche des zweiten Endbereiches aufhebt. Dies führt zum Öffnen der Rohrschelle und zum Herausfallen der von der Rohrschelle ursprünglich festgehaltenen Rohre.

In der EP-A-0 454 661 ist eine Manschette für Rohre und Schläuche beschrieben, die in Verbindung mit einem an ein Rohr- oder Schlauchende ansetzbaren Rohrstutzen verwendet wird. Die Manschette besteht aus einem Metallband, die das Rohrende umschliesst, und unter Überlappen seiner beiden Enden zusammenziehbar ist. An einem Bandende ist eine Reihe von in Bandrichtung aufeinanderfolgenden Öffnungen vorgesehen. Am anderen Bandende ist ein Haken angeordnet, der von der Bandfläche radial abragt. Vor und nach dem Haken ist je ein aus dem Bandmaterial geformter, über die Bandfläche aufragender Führungsbügel vorgesehen. Zum Schliessen der Manschette muss das mit den Öffnungen versehene Bandende durch die beiden Führungsbügel geschoben werden und muss der Haken in Eingriff mit einer der Öffnungen gebracht werden. Dies ist bei der Steifigkeit des Metallbands nur relativ umständlich bewerkstelligbar.

Aus der EP-A-461 973 ist eine Spannschelle aus einem Metallband bekannt, deren eines Bandende hakenförmig umgebogen ist und in einen durch Zusammenlegen des Metallbands geformten Vorsprung einhängbar ist. Nach dem Schliessen der Spannschelle werden im Überlappungsbereich der Bandenden axial abragende Vorsprünge umgebogen, um die beiden Bandenden zusammenzuklemmen und ein unbeabsichtigtes Öffnen der Spannschelle zu verhindern. Der Hakenverschluss dieser Spannschelle ist nicht sehr stabil ausgebildet. Zur Sicherung der beiden Bandenden müssen in einem gesonderten Arbeitsschritt die in axialer Richtung abragenden Vorsprünge umgebogen werden. Dabei kann es vorkommen, dass sie nur ungenügend weit umgebogen werden und die beiden Bandenden nur unzureichend fest klemmen. Dies kann dazu führen, dass sich die Spannschelle löst und herabfällt. Auch besteht die Gefahr, dass einer oder beide der axial abragenden Vorsprünge beim Umbiegen abbrechen. Dann kann die Fixierung der Bandenden aneinander nur mehr unzureichend oder gar nicht mehr durchgeführt werden.

Der Erfindung liegt die Aufgabe zugrunde, eine Rohrschelle zu schaffen, bei der ein radiales Auseinanderbewegen der sich überlappenden Endbereiche im geschlossenen Zustand der Rohrschelle verhindert wird. Die Rohrschelle soll einfach handhabbar sein und ein schnelles Schliessen erlauben.

Erfindungsgemäss wird die Aufgabe dadurch gelöst, dass die das radiale Ausweiten des zweiten Endbereiches nach aussen verhindernden Führungen von radial nach aussen abragenden, abgewinkelten Teilen des Endbereiches gebildet sind, deren freie Enden einander zugewandt sind, wobei der Abstand zwischen den freien Enden der abgewinkelten Teile grösser als die Breite der radial federbaren Verriegelungslasche des zweiten Endbereiches.

Beim Schliessen der erfindungsgemässen Rohrschelle überlappt der erste Endbereich den zweiten Endbereich wenigstens teilweise an der Aussenseite. Dabei wird der radiale Bewegungsbereich des zweiten Endbereiches nach aussen hin eingeschränkt. Trifft sodann der radial vom ersten Endbereich abragende Vorsprung auf die radial federbare Verriegelungslasche, die ebenfalls Teil des zweiten Endbereiches ist, so wird diese im wesentlichen radial nach aussen gedrückt, so dass der Vorsprung unter die Verriegelungslasche geschoben werden kann. Gelangt der Vorsprung in den Bereich der vom freien Ende des zweiten Endbereiches abgewandten Anschlagfläche des zweiten Endbereiches, so federt die Verriegelungslasche in ihre ursprüngliche Lage zurück. Der Abstand zwischen den freien Enden der abgewinkelten Teile ermöglicht eine Bewegung der radial federbaren Verriegelungslasche.

Aus handhabungstechnischen Gründen und aus der Sicht der besseren Zugänglichkeit sowie Erkennbarkeit sind die Führungen zweckmässigerweise am äusseren Umfang der Endbereiche angeordnet. Insbesondere beim Schliessen der Rohrschelle kann der zweite Endbereich somit der Führung des ersten Endbereiches besser zugeführt werden.

Um ein gutes Verschieben des zweiten Endbereiches entlang der Aussenseite des ersten Endbereiches ermöglichen zu können, ist die in radialer Richtung gemessene lichte Weite der Führungen vorzugsweise grösser als die Materialstärke des zweiten Endbereiches. Um eine gute Zentrierung des zweiten Endbereiches innerhalb der Führungen des ersten Endbereiches ermöglichen zu können, können die Führungen zusätzlich mit einer zum freien Ende des ersten Endbereiches hin radial nach aussen erweiternden Einlaufschräge versehen sein.

Für die einfache und wirtschaftliche Herstellung der Rohrschelle ist es zweckmässig, wenn die abgewinkelten Teile am äusseren Umfang des ersten Endbereiches jeweils in der radialen Verlängerung des stirnseitigen Bereiches angeordnet sind. Die grösste, parallel zur Mittellängsachse der Rohrschelle verlaufende lichte Weite zwischen den Führungen ist geringfügig grösser ausgebildet als die Breite des zweiten Endbereiches.

Die Erfindung wird anhand von Zeichnungen, die ein Ausführungsbeispiel wiedergeben, näher erläutert. Es zeigen:
- Fig. 1: eine erfindungsgemässe Rohrschelle im geöffneten Zustand;
- Fig. 2: eine vergrösserte Darstellung des Verschlussmechanismus der Rohrschelle gemäss Fig. 1 in geschlossener Position;
- Fig. 3: eine Seitenansicht des ersten Endbereiches der Rohrschelle gemäss Fig. Fig. 1.

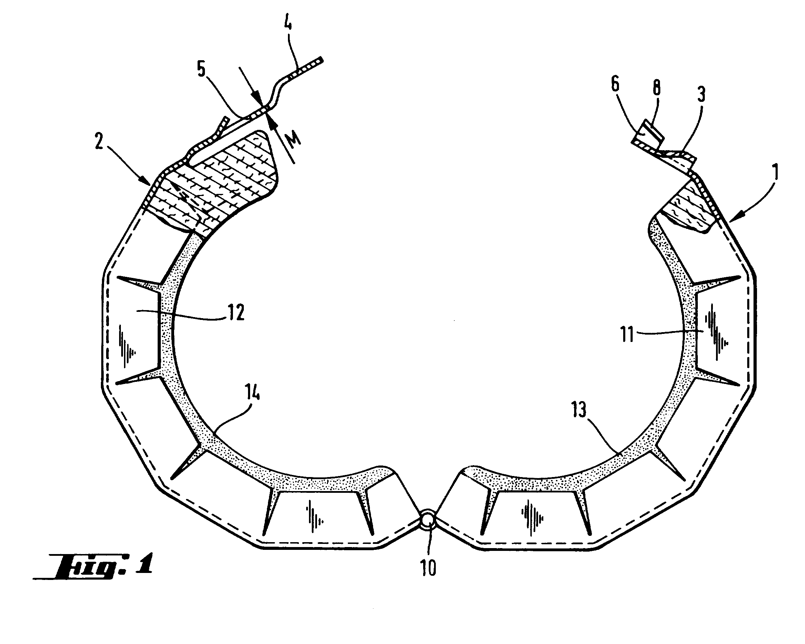

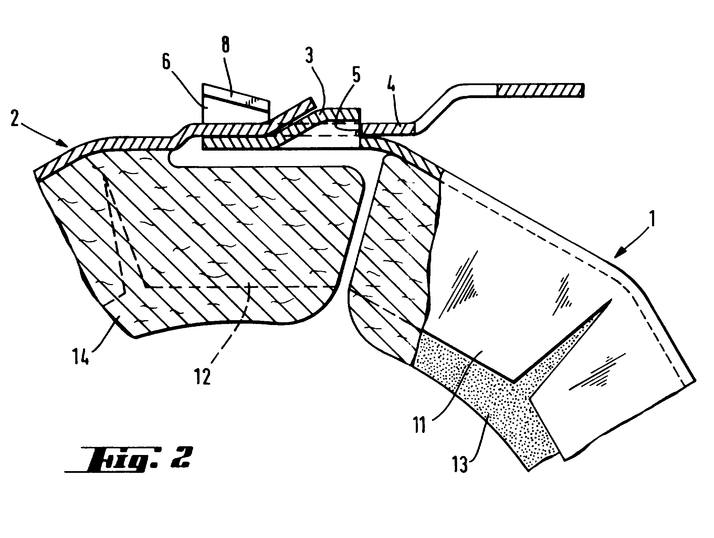

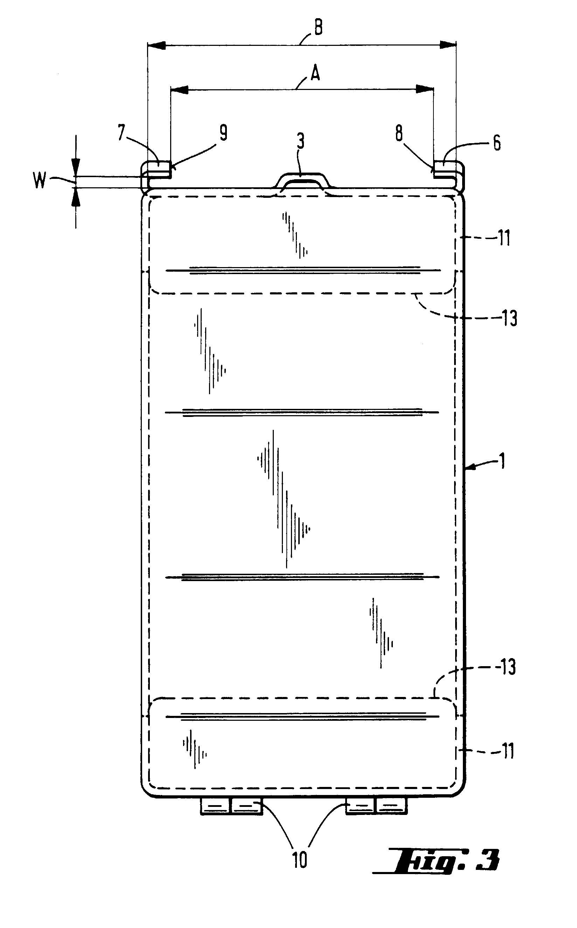

Die in Fig. 1 bis 3 dargestellte Rohrschelle besteht aus zwei im wesentlichen halbkreisförmigen Schellenhälften, die an einem Ende eine gemeinsame Schwenkachse 10 und am gegenüberliegenden Ende einen ersten Endbereich 1 und einen zweiten Endbereich 2 aufweisen, die mittels eines Verschliessmechanismus miteinander in Verbindung bringbar sind. Die beiden Endbereiche 1, 2 bestehen aus einzelnen, umgeformten Blechstreifen, deren Seitenbereiche 11, 12 geschlitzt und rechtwinklig nach innen umgebogen sind. Diese Seitenbereiche 11, 12 dienen der Halterung von Einlagen 13, 14 in der Rohrschelle, die beispielsweise aus einem elastischen Gummi, aus einem elastischen Gummi mit reibungsmindemder Beschichtung, oder einem brandhemmenden Material bestehen können.

Der Verschlussmechanismus des ersten Endbereiches 1 besteht aus einem an der Aussenseite des ersten Endbereiches 1 angeordneten, radial abragenden Vorsprung 3, dessen radiale Erstreckung zum freien Ende des ersten Endbereiches 1 hin abnimmt und zwei von der Aussenseite des ersten Endbereiches 1 radial nach aussen abragenden, die Führungen 6, 7 bildenden, abgewinkelten Teilen der Rohrschelle, deren freie Enden 8, 9 einander zugewandt sind.

Der Verschlussmechanismus des zweiten Endbereiches 2 besteht aus einer radial federbaren Verriegelungslasche 4 mit wenigstens einer vom freien Ende des zweiten Endbereiches 2 abgewandten Anschlagfläche 5. Die in radialer Richtung gemessene lichte Weite W der Führungen 6, 7 des ersten Endbereiches 1 ist grösser als die Materialstärke M des zweiten Endbereiches 2. Der Abstand A zwischen den freien Enden 8, 9 der Führungen 6, 7 ist grösser als die Breite der radial federbaren Verriegelungslasche 4 des zweiten Endbereiches 2. Die grösste parallel zur Mittellängsachse der Rohrschelle verlaufende lichte Weite (B) zwischen den Führungen 6, 7 entspricht im wesentlichen der Breite des ersten Endbereiches.

## Patentansprüche

1. Rohrschelle mit einem ersten Endbereich (1) und zweiten Endbereich (2), wobei der erste Endbereich (1) an der Aussenseite mit wenigstens einem radial abragenden Vorsprung (3) versehen ist, dessen radiale Erstreckung zum freien Ende des ersten Endbereiches (1) hin abnimmt, der zweite Endbereich (2) eine radial federbare Verriegelungslasche (4) mit wenigstens einer vom freien Ende des zweiten Endbereiches abgewandten Anschlagfläche (5) aufweist und wobei sich der erste Endbereich (1) und zweite Endbereich (2) in Umfangsrichtung überlappen, und der erste Endbereich (1) im Überlappungsbereich mit dem zweiten Endbereich (2) das radiale Ausweiten des zweiten Endbereiches (2) nach aussen verhindernde Führungen (6, 7) aufweist, dadurch gekennzeichnet, dass die Führungen (6, 7) von radial nach aussen abragenden, abgewinkelten Teilen gebildet sind, deren freie Enden (8, 9) einander zugewandt sind, wobei der Abstand (A) zwischen den freien Enden (8, 9) der abgewinkelten Teile grösser ist als die Breite der radial federbaren Verriegelungslasche (4) des zweiten Endbereiches (2).

2. Rohrschelle nach Anspruch 1, dadurch gekennzeichnet, dass die Führungen (6, 7) am äusseren Umfang des Endbereiches (1) angeordnet sind.

3. Rohrschelle nach Anspruch 1 oder 2, dadurch gekennzeichnet, dass die in radialer Richtung gemessene lichte Weite (W) der Führungen (6, 7) grösser ist als die Materialstärke (M) des zweiten Endbereiches (2).

## Claims

1. Pipe clamp with a first end area (1) and a second end area (2), and the first end area (1) is externally provided with at least one radially extending protrusion (3) the radial extent of which decreases towards the free end of the first end area (1), and the second end area (2) comprises a radially springy locking tongue (4) with at least one stop surface (5) which is facing away from the free end of the second end area, and the first end area (1) and the second end area (2) overlap in the peripheral direction, and the first end area (1) comprises in the overlap area with the second end area (2) guides (6, 7) which prevent radial expansion of the second end area (2) towards the outside, **characterised in that** the guides (6, 7) are formed by radially outward protruding angled elements the free ends (8, 9) of which are facing towards each other, and the distance (A) between the free ends (8, 9) of the angled parts is greater than the width of the radially springy locking tongues (4) of the second end area (2).

2. Pipe clamp according to Claim 1, **characterised in that** the guides (6, 7) are arranged on the outer periphery of the end area (1).

3. Pipe clamp according to Claim 1 or 2, **characterised in that** the clearance (W) of the guides (6, 7) as measured in the radial direction is greater than the material thickness (M) of the second end area (2).

## Revendications

1. Collier de serrage, comprenant une première section terminale (1) et une seconde section terminale (2), la première section terminale (1) présentant sur la surface extérieure au moins une saillie radiale (3) dont l'extension radiale diminue en direction de l'extrémité libre de la première section terminale (1), la seconde section terminale (2) comportant une patte de verrouillage (4) élastique dans le sens radial, avec au moins une surface d'arrêt (5) située à l'oppposé de l'extrémité libre de la seconde section terminale, et la première section terminale (1) et la seconde section terminale (2) se recouvrant dans la direction circonférentielle, et la première section terminale (1) présentant, dans la zone de recouvrement avec la seconde section terminale (2), des guidages (6, 7) qui empêchent l'élargissement radial de la seconde section terminale (2) vers l'extérieur, **caractérisé en ce** que les guidages (6, 7) sont constitués par des éléments coudés dépassant radialement vers l'extérieur, dont les extrémités libres (8, 9) sont tournées l'une vers l'autre, la distance (A) entre les extrémités libres (8, 9) des éléments coudés étant plus grande que la largeur de la patte de verrouillage (4) de la seconde section terminale (2), élastique dans le sens radial.

2. Collier de serrage selon la revendication 1, caractérisé en ce que les guidages (6, 7) sont disposés à la périphérie extérieure de la section terminale (1).

3. Collier de serrage selon la revendication 1 ou 2, caractérisé en ce que l'ouverture intérieure (W) des guidages (6, 7) est plus grande que l'épaisseur de paroi (M) de la seconde section terminale (2).
